# EUROPEAN PATENT SPECIFICATION

(11) **EP 0 929 976 B1**
(45) Date of publication and mention of the grant of the patent: **27.11.2002**
(21) Application number: 97943960.1
(22) Date of filing: 26.09.1997
(51) Int. Cl.: H04N 7/36

(54) **METHOD AND APPARATUS FOR MOTION ESTIMATION**
VERFAHREN UND VORRICHTUNG ZUR BEWEGUNGSSCHÄTZUNG
PROCEDE ET APPAREIL D'ESTIMATION DU MOUVEMENT

(30) Priority: 27.09.1996 GB 9620162
(43) Date of publication of application: 21.07.1999
(73) Proprietor: Tandberg Television ASA, 1326 Lysaker (NO)
(72) Inventor: BOCK, Alois, Martin, Hampshire SO50 4PF (GB)
(74) Representative: Molyneaux, Martyn William
(86) International application number: GB9702638
(87) International publication number: WO98014010

(56) References cited:
- EP-A- 0 468 279
- EP-A- 0 535 746
- EP-A- 0 554 586
- EP-A- 0 592 128
- EP-A- 0 695 083

## Description

The present invention relates to a method and apparatus for generating digitally encoded signals which include portions of code that have been predicted from earlier code in the signal and which include prediction parameters relating the predicted portions of code to the earlier code. The invention is of particular advantage in the generation and transmission of digital video signals.

Digital video compression systems generally use temporal predictive coding in order to reduce the data rate of the transmitted signal. In the coding process, predictions are made for the reconstruction of the current picture based on elements of pictures that have been coded in the past. These picture elements, which may be referred to as 'blocks' are manipulated in a certain way (translation, scaling, rotation) before they form the basis of the prediction. In order to make it possible to reconstruct the sequence in the decoder, the parameters used in the manipulation of the blocks have to be transmitted, usually accompanied by a correction signal which minimises the effects of prediction errors.

Due to the spatial correlation of adjacent picture elements, the manipulation parameters themselves are usually predictively coded in such a way that small changes require fewer bits for transmission than larger ones which are less common. The quality of the block predictions is assessed using a metric based on the difference between the predicted block and the block which is to be coded. This metric will be referred to as the distortion value hereinafter.

As the processing power dedicated to making better predictions increases, larger areas are searched in the reference picture and small differences in the quality of the predictions become more significant. If predictions of approximately equal quality are made from completely different picture areas, however, there is a danger that a small advantage in prediction quality is outweighed by a larger code word for the transmission of the prediction parameter.

European Patent Application number 0 468 279, entitled "Method for the determination of movement vectors for field regions of a source image sequence" describes a method in which at least two movements vectors are determined in a first step in a reduced-definition image. The choice of which movement vector to use is then based on the one with the smallest error signal.

The present invention is concerned with improving the selection of predictions.

According to the present invention, there is now provided a method of generating a digitally encoded signal which includes portions of code that have been predicted from earlier code in the signal, the method comprising; making a plurality of candidate predictions for each portion of predicted code, deriving a distortion value representing the extent of distortion for each candidate prediction, selecting a prediction based on the distortion values of the candidate predictions, and biasing the selection between candidate predictions towards that prediction selected for the preceding predicted code portion.

Further according to the present invention there is provided apparatus for generating a digitally encoded signal which includes portions of code that have been predicted from earlier code in the signal, the apparatus comprising; prediction means to undertake a plurality of candidate predictions for each portion of predicted code, means to derive a distortion value representing the extent of distortion for each candidate prediction, selection means to select a prediction based on the distortion values of the candidate predictions and, means to bias the selection between candidate predictions towards that prediction selected for the preceding predicted code portion.

The invention will now be described, by way of example, with reference to the accompanying drawings in which:
Figure 1 is an explanatory diagram to illustrate the problem addressed by the invention;
Figure 2 shows a block diagram of apparatus embodying the invention; and
Figure 3 is illustrative of the functioning of the apparatus shown in Figure 2.

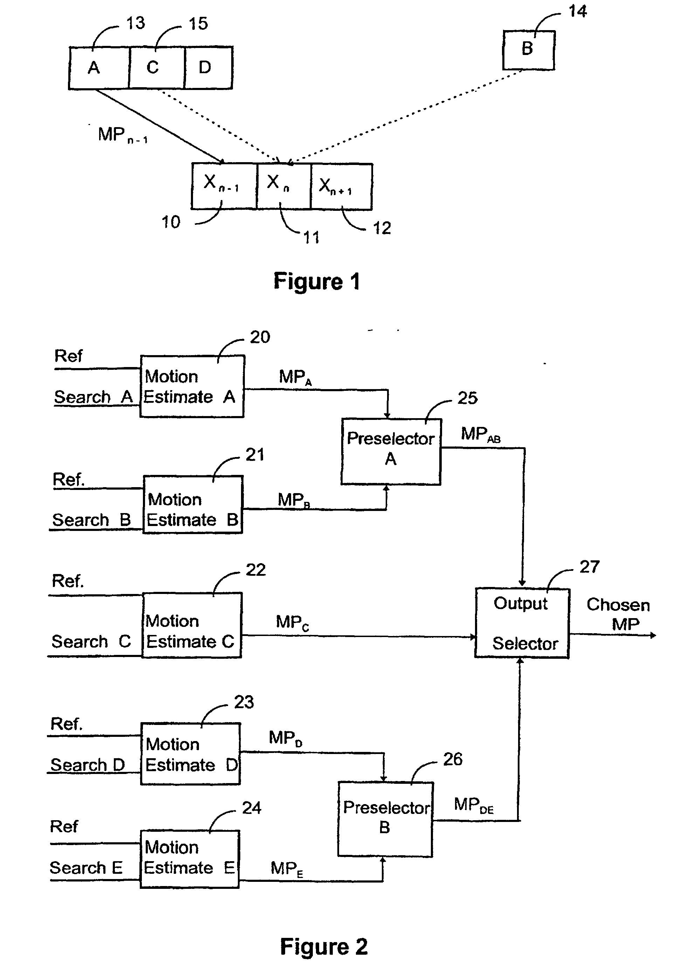

Referring now to Figure 1, there are shown a series of picture areas Xₙ₋₁ (10), Xₙ (11) and Xₙ₊₁ (12). The picture area Xₙ₋₁ (10) has been predicted by a translation MPₙ₋₁ of a block A (13) in the previously coded picture. For the prediction of the picture area Xₙ (11) there are two candidate blocks, B (14) and C (15) with respective associated quality measures M_{B} and M_{C} of approximately equal value.

In the case where M_{C} is slightly better than M_{B}, then since block C (15) is adjacent to block A (13), the previous manipulation parameter MPₙ₋₁ can also be used for the prediction of the block Xₙ (11) and of the parameter MPₙ. The prediction of MPₙ is therefore simple and likely to require only a small codeword. Furthermore, the block Xₙ₊₁ (12) can be predicted using the same manipulation parameter yet again.

In the second case M_{B} is assumed to be slightly better than M_{C}. In this case the block Xₙ (11) and the manipulation parameter MPₙ would be predicted on the basis of the block B (14) which is no longer adjacent to the block A (13). The result is a large codeword for the prediction of MPₙ. A second codeword of similar size would also be required for MPₙ₊₁. The combined effect of these two codewords is likely to outweigh the small coding advantages in the prediction of the block Xₙ (11).

The example described with reference to Figure 1 is illustrative of how the selection of prediction parameters based purely on a distortion metric will give less than the optimum performance. The invention is concerned to improve performance by taking the coding history of the prediction parameters into account in making a selection between possible predictions.

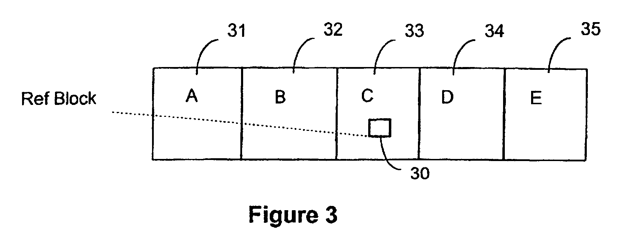

Referring now to Figure 2, there is shown a motion estimation system including five motion estimation blocks A (20), B (21), C (22), D (23) and E (24), each working on the same reference block to be coded but with different search areas A to E. The reference block (30) and the search segments or areas A to E (31-35) are illustrated in Figure 3. The five search areas (31-35) are assumed to cover horizontally adjacent panels.

The input to each motion estimator (20-24) includes a signal input for the reference block (30) and a signal input for the corresponding search area A (31), B (32), C (33), D (34) or E (35). The motion estimators (20-24) produce respective motion parameters MP_{A}, MP_{B}, MP_{C}, MP_{D} and MP_{E} at their outputs.

Pre-selector A (25), selects between the motion parameters MP_{A} and MP_{B} to select one of two motion parameters which is labeled MP_{AB} at the output from the pre-selector A (25). Pre-selector B (26) selects between the motion parameters MP_{D} and MP_{E} to produce a motion parameter at the output which is labeled MP_{DE}. An output selector (27) makes a selection from the motion parameters MP_{AB}, MP_{C} and MP_{DE}.

The manipulation parameters and the distortion values for the different segments or areas A to E (31-35) are calculated separately. Once a manipulation parameter of one search area has been selected, a small bias is introduced towards the same search area. This means that distortion values of a different search area have to be lower, by a certain threshold, in order for the manipulation parameter for that search area to be selected. A further bias is introduced towards small displacement parameters, i.e. the search area closest to the reference block to be coded. This ensures start up and recovery in situations where the prediction from each search area is of exactly equal quality, e.g. in the case of blank pictures.

Thus, referring once again to Figure 2, once pre-selectors A (25) and B (26) and the output selector (27) have chosen a particular path, any other path will need a lower distortion value in order to be chosen. If the distortion value associated with MP_{AB} or MP_{DE} is equal to MP_{C}, then MP_{C} will be chosen by default so as to introduce a slight bias towards smaller displacement parameters, i.e. the search area closest to the reference block (30) to be coded as shown in Figure 3.

The distortion value is available as a binary number of N digits where N has a value of 10 but may have other values. The bias is preferably introduced by adding a threshold to the distortion value of each of the search areas except the one that was selected for the last block to be encoded.

Alternatively, the comparison may be made on a number of bits, say M bits, which is less than N. While the probability increases that, two search areas have the same distortion value when measured over the M bits (M<N), the same search area is chosen as for the previous block.

## Claims

1. A method of generating a digitally encoded signal which includes portions of code that have been predicted from earlier code in the signal, the method comprising: making a plurality of candidate predictions for each portion of predicted code, deriving a distortion value representing the extent of distortion for each candidate prediction, selecting a prediction based on the distortion values of the candidate predictions, and biasing the selection between candidate predictions towards that prediction selected for the preceding predicted code portion.

2. A method according to Claim 1, which is applied to generating a digitally encoded signal representing picture information.

3. A method according to Claim 2, wherein the step of making the plurality of candidate predictions consists of using predictive coding to make estimations of motion parameters corresponding to respective picture search areas.

4. A method according to Claim 3, wherein the step of biasing the selection between the Candidate predictions includes introducing a further bias in the selection of candidate predictions towards the estimation of the motion parameter representing the smallest displacement.

5. A method according to Claim 1, 2, 3 or 4, wherein the steps of biasing the selection between candidate predictions comprises adding a threshold to the distortion value of all the candidate predictions except the one selected for the preceding predicted code portion.

6. Apparatus for generating a digitally encoded signal which includes portions of code that have been predicted from earlier code in the signal, the apparatus comprising: prediction means to undertake a plurality of candidate predictions for each portion of predicted code, means to derive a distortion value representing the extent of distortion for each candidate prediction, selection means to select a prediction based on the distortion values of the candidate predictions, and biasing means to bias the selection between candidate predictions towards that prediction selected for the preceding predicted code portion.

7. Apparatus according to Claim 6, which is adapted to generate a digitally encoded signal representing picture information.

8. Apparatus according to Claim 7, wherein the prediction means comprise a plurality of motion estimators operable to generate the candidate predictions, using predictive coding, in the form of motion parameters corresponding to respective picture search areas.

9. Apparatus according to Claim 8, wherein the biasing means is adapted to introduce a further bias in the selection of the candidate predictions towards the estimation of the motion parameter representing the smallest displacement.

10. Apparatus according to Claim 6, 7, 8 or 9, wherein the biasing means is adapted to introduce a threshold to the distortion value of all the candidate predictions except the one selected for the preceding predicted code portion.

## Patentansprüche

1. Verfahren zum Erzeugen eines digital kodierten Signals, das Teile eines Codes enthält, die von einem früheren Code in dem Signal vorhergesagt wurden, wobei das Verfahren folgendes umfasst: Erstellen einer Vielzahl von in Frage kommenden Vorhersagen für jeden Teil eines vorhergesagten Codes, Ableiten eines Verzerrungswertes, der das Ausmaß der Verzerrung für jede in Frage kommende Vorhersage darstellt, Auswählen einer Vorhersage, die auf den Verzerrungswerten der in Frage kommenden Vorhersagen basiert, und Vorspannen der Auswahl zwischen den in Frage kommenden Vorhersagen in Richtung auf diejenige Vorhersage, die für den vorhergehenden vorhergesagten Codeteil ausgewählt wurde.

2. Verfahren nach Anspruch 1, das zur Erzeugung eines digital kodierten Signals angewandt wird, das Bildinformationen darstellt.

3. Verfahren nach Anspruch 2, wobei der Schritt des Abgebens der Vielzahl von in Frage kommenden Vorhersagen darin besteht, dass eine Prädiktionscodierung verwendet wird, um Schätzungen von Bewegungsparametern abzugeben, die mit entsprechenden Suchbereichen von Bildern korrespondieren.

4. Verfahren nach Anspruch 3, wobei der Schritt des Vorspannens der Auswahl zwischen den in Frage kommenden Vorhersagen das Hinzufügen einer weiteren Vorspannung zu der Auswahl von in Frage kommenden Vorhersagen in Richtung der Schätzung des Bewegungsparameters umfasst, der die geringste Verlagerung darstellt.

5. Verfahren nach Anspruch 1, 2, 3 oder 4, wobei die Schritte des Vorspannens der Auswahl zwischen in Frage kommenden Vorhersagen das Hinzufügen eines Schwellwertes zum Verzerrungswert aller in Frage kommenden Vorhersagen umfasst, mit Ausnahme derjenigen, die für den vorangehenden vorhergesagten Codeteil ausgewählt wurde.

6. Vorrichtung zum Erzeugen eines digital kodierten Signals, das Teile eines Codes enthält, die von einem früherem Code in dem Signal vorhergesagt wurden, wobei die Vorrichtung folgendes umfasst: eine Vorhersage-Einrichtung, um eine Vielzahl von in Frage kommenden Vorhersagen für jeden Teil eines vorhergesagten Codes abzugeben, eine Einrichtung zum Ableiten eines Verzerrungswertes, der das Ausmaß der Verzerrung für jede in Frage kommende Vorhersage darstellt, eine AuswahlEinrichtung, um eine Vorhersage auszuwählen, die auf den Verzerrungswerten der in Frage kommenden Vorhersagen basiert, und eine Vorspann-Einrichtung, um die Auswahl zwischen den in Frage kommenden Vorhersagen in Richtung derjenigen Vorhersage vorzuspannen, die für den vorangegangenen vorhergesagten Codeteil ausgewählt wurde.

7. Vorrichtung nach Anspruch 6, die zur Erzeugung eines digital kodierten Signals angepasst ist, das Bildinformationen darstellt.

8. Vorrichtung nach Anspruch 7, wobei die Vorhersage-Einrichtungen eine Vielzahl von Bewegungsschätzern umfassen, die betreibbar sind zum Erzeugen der in Frage kommenden Vorhersagen, wobei die Bewegungsschätzer eine Prädiktionscodierung verwenden und zwar in Form von Bewegungsparametern, die mit entsprechenden Suchbereichen eines Bildes korrespondieren.

9. Vorrichtung nach Anspruch 8, wobei die Vorspann-Einrichtung so angepasst ist, dass sie eine weitere Vorspannung zu der Auswahl von den in Frage kommenden Vorhersagen in Richtung der Schätzung des Bewegungsparameters umfasst, der die geringste Verlagerung darstellt.

10. Vorrichtung nach Anspruch 6, 7, 8 oder 9, wobei die Vorspann-Einrichtung so angepasst ist, dass sie einen Schwellwert zu dem Verzerrungswert aller in Frage kommenden Vorhersagen hinzufügt, mit Ausnahme derjenigen, die für den vorangehenden vorhergesagten Codeteil ausgewählt wurde.

## Revendications

1. Procédé de production d'un signal codé de manière numérique qui comporte des parties de code qui ont été prévues à partir d'un code antérieur dans le signal, le procédé comprenant: la réalisation d'une pluralité de prévisions candidates pour chaque partie de code prévu, la déduction d'une valeur de distorsion représentant l'amplitude de distorsion de chaque prévision candidate, la sélection d'une prévision sur la base des valeurs de distorsion des prévisions candidates, et le décalage de la sélection entre les prévisions candidates vers la prévision sélectionnée pour la précédente partie de code prévu.

2. Procédé selon la revendication 1, qui est appliqué afin de produire un signal codé de manière numérique représentant des informations d'image.

3. Procédé selon la revendication 2, dans lequel l'étape de réalisation de la pluralité de prévisions candidates consiste à utiliser un codage par prévision afin de réaliser des estimations de paramètres de déplacement correspondant à des zones de scrutation d'image respectives.

4. Procédé selon la revendication 3, dans lequel l'étape de décalage de la sélection entre les prévisions candidates comprend l'introduction d'un autre décalage sur la sélection des prévisions candidates vers l'estimation du paramètre de déplacement représentant le déplacement le plus faible.

5. Procédé selon la revendication 1, 2, 3 ou 4, dans lequel les étapes de décalage de la sélection entre des prévisions candidates comprend l'ajout d'un seuil sur la valeur de distorsion de toutes les prévisions candidates à l'exception de celle qui a été sélectionnée pour la précédente partie de code prévu.

6. Dispositif destiné à produire un signal codé de manière numérique qui comporte des parties de code qui ont été prévues à partir d'un code antérieur dans le signal, le dispositif comprenant: un moyen de prévision destiné à entreprendre une pluralité de prévisions candidates pour chaque partie de code prévu, un moyen destiné à déduire une valeur de distorsion représentant l'amplitude de distorsion de chaque prévision candidate, un moyen de sélection destiné à sélectionner une prévision basée sur les valeurs de distorsion des prévisions candidates, et un moyen de décalage destiné à décaler la sélection entre des prévisions candidates vers la prévision sélectionnée pour la précédente partie de code prévu.

7. Dispositif selon la revendication 6, qui est adapté afin de produire un signal codé de manière numérique représentant des informations d'image.

8. Dispositif selon la revendication 7, dans lequel le moyen de prévision comprend une pluralité d'éléments d'estimation de déplacement pouvant être commandés afin de produire les prévisions candidates, en utilisant le code de prévision, sous la forme de paramètres de déplacement correspondant à des zones de scrutation d'image respectives.

9. Dispositif selon la revendication 8, dans lequel le moyen de décalage est adapté afin de produire un décalage supplémentaire sur la sélection des prévisions candidates vers l'estimation du paramètre de déplacement représentant le déplacement le plus faible.

10. Dispositif selon la revendication 6, 7, 8 ou 9, dans lequel le moyen de décalage est adapté de manière à introduire un seuil sur la valeur de distorsion de toutes les prévisions candidates à l'exception de celle qui a été sélectionnée pour la précédente partie de code prévu.
